# EUROPEAN PATENT SPECIFICATION

(11) **EP 1 791 924 B1**
(45) Date of publication and mention of the grant of the patent: **01.10.2008**
(21) Application number: 05798387.6
(22) Date of filing: 15.09.2005
(51) Int. Cl.: C09K 8/72

(54) **DIFFERENTIAL ETCHING IN ACID FRACTURING**
DIFFERENZIALÄTZUNG BEIM SÄUREFRAKTURIEREN
GRAVURE DIFFERENTIELLE LORS D'OPERATIONS DE FRACTURATION A L'ACIDE

(30) Priority: 15.09.2004 US 941385
(43) Date of publication of application: 06.06.2007
(73) Proprietor: Services Pétroliers Schlumberger, 75007 Paris (FR); Schlumberger Holdings Limited, Road Town, Tortola (VG); Schlumberger Technology B.V., 2514 JG The Hague (NL)
(72) Inventor: BROWN, J. Ernest, Katy, TX 77450 (US); STILL, John W., Richmond, TX 77469 (US); FU, Diankui, Missouri City, TX 77459 (US); XIAO, Zhijun, Sugar Land, TX 77479 (US)
(74) Representative: Stoole, Brian David
(86) International application number: PCT/IB2005/053041
(87) International publication number: WO 2006/030397

(56) References cited:
- US-A- 3 998 272
- US-A- 5 238 067
- US-A1- 2002 070 022
- US-B1- 6 207 620

## Description

### Background of the Invention

The invention relates to stimulation of wells penetrating subterranean formations. More particularly it relates to acid fracturing; most particularly it relates to methods of etching the fracture faces so that etching is minimal in some regions but a conductive path from the fracture tip to the wellbore is nonetheless created.

In acid fracturing, acid is placed in the fracture, preferably along the entire distance from the fracture tip to the wellbore, so that it reacts with the face of the fracture to etch differential flow paths that a) create disparities so that the opposing fracture faces do not match up when the fracture pressure is released and so the fracture does not close completely, and b) provide flow paths for produced fluid along the fracture faces from distant portions of the fracture to the wellbore (or flow paths for injecting fluids into the formation). Normally, the acid is placed in the desired location by forming an acidic fluid on the surface and pumping the acidic fluid from the surface and down the wellbore above fracture pressure. In the absence of other influences, flow channels are formed as a result of uneven reaction with the rock surface (differential etching), typically caused by localized heterogeneities in the mineralogical make up (lithology) of the formation. There are generally three major problems encountered during this normal procedure.

First, in the pumping operation the acid is in contact with iron-containing components of the wellbore such as casing, liner, coiled tubing, etc. Strong acids are corrosive to such materials, especially at high temperature. This means that corrosion inhibitors must be added to the fluid being injected in order not to limit the amount of acid, and/or the time of exposure, that can be used during injection of the acid. Furthermore, acid corrosion creates iron compounds such as iron chlorides. These iron compounds may precipitate, especially if sulfur or sulfides are present, and may interfere with the stability or effectiveness of other components of the fluid, thus requiring addition of iron control agents or iron sequestering agents to the fluid.

Second, if, as is usually the case, the intention is to use the acid to treat parts of the formation at a significant distance away from the wellbore (usually in addition to treating parts of the formation nearer the wellbore), this may be very difficult to accomplish because if an acid is injected from the surface down a wellbore and into contact with the formation, the acid will naturally react with the first reactive material with which it comes into contact. Depending upon the nature of the well and the nature of the treatment, this first-contacted and/or first-reacted material may be a filtercake, may be the formation surface forming the wall of an uncased (or openhole) wellbore, may be the near-wellbore formation, or may be a portion of the formation that has the highest permeability to the fluid, or is in fluid contact with a portion of the formation that has the highest permeability to the fluid. In many cases, this may not be the formation (matrix) material with which the operator wants the acid to react. At best this may be wasteful of acid; at worst this may make the treatment ineffective or even harmful. In general, the higher the temperature the more reactive is the acid and the greater are the problems. This is usually a severe problem when at least some of the formation is carbonate, which is typically very reactive towards acid.

Third, even when the acid has successfully been contacted with the desired region of the fracture face, there is sometimes a tendency for the acid to react evenly with the fracture faces, especially in localized regions, so that conductive channels along the fracture faces are not created by differential etching in such regions after fracture closure. This is most likely to occur when the rate of delivery of the acid to the reactive site (e.g. the fluid injection rate) is much lower than the rate of reaction of the acid. Avoiding this problem may require careful monitoring and control of acid strength and injection rates.

There are several ways in which operators have dealt with these problems in the past. One method is to segregate the acid from the material with which reaction is not desired (such as wellbore metals or a near-wellbore reactive region of the formation). This is done, for example, by a) placing the acid in the internal phase of an emulsion (so-called "emulsified acid") and then either causing or allowing the emulsion to invert at the time and place where reaction is desired or allowing slow transport of the acid across the phase boundaries, or b) encapsulating the acid, for example by the method described in U.S. Patent No. 6,207,620, and then releasing the acid when and where it is needed. There are problems with these methods. Although emulsified acids are popular and effective, they require additional additives and specialized equipment and expertise, and may be difficult to control. A problem with the encapsulated acids is that the location and timing of release of the acid may be difficult to control. The release is brought about by either physical or chemical degradation of the coating. Physical damage to the encapsulating material, or incomplete or inadequate coating during manufacture, could cause premature release of the acid.

A second method is to delay formation of the acid. Templeton, et al., in "Higher pH Acid Stimulation Systems", SPE paper 7892, 1979, described the hydrolysis of esters such as methyl formate and methyl acetate as *in situ* acid generators in the oilfield. They also described the reaction of ammonium monochloroacetic acid with water to generate glycolic acid and ammonium chloride in the oilfield. However, these acid precursors are liquids, and these reactions may take place rapidly as soon as the acid precursors contact water. A third method of encouraging differential etching is to fracture with a viscous non-acidic fluid and then to cause a less-viscous acid to finger through the viscous fluid.

There is a need for a method for creating highly conductive fractures along as much of the fracture length as possible without employing a complicated job design and while limiting the volume of acid needed.

### Summary of Embodiments of the Invention

A method of creating a fracture in a subterranean formation penetrated by a wellbore is provided that includes injecting a fluid, above fracture pressure, that contains both an agent that can dissolve at least one component of the formation, and inert solid particles that can inhibit the reaction of the dissolving agent with the fracture faces where it contacts them. The particles must be shaped so that, or be deformable into shapes so that, they cover part of the fracture face, rather than having just points or lines of contact. The fracture is then allowed to close and the dissolution agent is allowed to dissolve a portion of one or both of the fracture faces. The fluid may optionally contain a viscosifying agent to help expand the fracture and carry the inert particles.

The inert solid particles may be beads, ribbons, platelets, fibers, other shapes, and mixtures; the inert solid particles may be deformable under the fracture closure stress so that they cover a greater portion of the fracture face than a point or a line, and they may degrade after the dissolution agent reacts. Suitable materials include plastic, glass, polyacrylamide, phenol formaldehyde polymer, nylon, wax, natural rubber, synthetic rubber, vermiculite, organic seeds, organic shells, mica, cellophane flakes, starch, rock salt, benzoic acid, metals, naphthalene and mixtures. The concentration of the inert solid particles in the fluid may be from about 0.05 kg/L to about 0.6 kg/L. The dissolution agent may be for example hydrochloric acid, formic acid, acetic acid, lactic acid, glycolic acid, aminopolycarboxylic acids, sulfamic acid, malic acid, tartaric acid, maleic acid, methylsulfamic acid, chloroacetic acid, 3-hydroxypropionic acid, polyaminopolycarboxylic acids, bisulfate salts, latent or retarded acid systems including emulsified, encapsulated, gelled, and chemically retarded acids, salts thereof, mixtures thereof, or other materials.

In other embodiments the fluid may contain a hydrogen fluoride source, in which case the fluid injection may be preceded by injection of a fluoride-free acidic fluid and/or a spacer. The hydrogen fluoride source may be HF or may be selected from ammonium fluoride, ammonium bifluoride, polyvinylammonium fluoride, polyvinylpyridinium fluoride, pyridinium fluoride, imidazolium fluoride, sodium tetrafluoroborate, ammonium tetrafluoroborate, salts of hexafluoroantimony, TEFLON^{™} synthetic resinous fluorine-containing polymer, and mixtures. The hydrogen fluoride source may be dissolved in the fluid as injected or may be a solid and may be coated (including encapsulated).

Yet another embodiment of the invention is a composition containing both an agent capable of dissolving at least a portion of a subterranean formation, and inert solid particles that can conform to one or both faces of a fracture in the formation and that inhibit reaction of the dissolving agent with at least one formation component where they conform to a fracture face.

### Brief Description of the Drawings

Figure 1 shows the results of a core flow experiment that was conducted with an inert masking material.

Figure 2 shows the permeabilities observed in a core flow experiment that was conducted with an inert masking material.

Figure 3 shows a schematic of a fracture that is created with an inert masking material present.

### Detailed Description of Embodiments of the Invention

The methods of the invention are particularly useful a) under circumstances of high closure stress, b) if the formation has low compressive strength or c) if the formation lithology is very homogenous.

Although the term "acid" is generally used here to describe agents capable of dissolving components of a formation, it is to be understood that other reactive fluids (such as chelating agents, for example aminocarboxylic acids, polyaminopolycarboxylic acids, etc.) may also be used, and the term "acid" is intended to include such materials. The method of the invention may in fact be used with any dissolution agent (including those that are delayed, or retarded (gelled, or emulsified)) for any subterranean formation lithology, provided only that a masking agent (see below) is chosen that is suitably inert in the dissolution agent (and does not excessively interfere with its efficacy). The method is particularly suitable for use with expensive dissolution agents because the method increases the dissolution efficiency and therefore reduces the amount of dissolution agent needed. On the other hand, the need for delay or retardation is reduced with the present method.

A major problem with acid fracturing of carbonates occurs when the acid reacts too readily with the formation, so that mass transport of acid to the reaction point becomes rate limiting, resulting in too much reaction in some localized areas and little or no reaction elsewhere. A major problem with acid fracturing of sandstones is that the acid typically reacts too slowly, so that the reaction rate is rate limiting, resulting in too even reaction and inadequate differential etching. This is especially true for sandstone reservoirs having relatively low bottom hole static temperatures.

In embodiments of the invention, dissolving systems are not allowed to react with some portions of the fracture face, while still reacting with, and etching, other portions of the fracture face. During the treatment, portions of the fracture face are protected from acid dissolution by placing a barrier or mask over a portion of the fracture face. This process of masking the formation (similar to the process performed during photolithography) protects a portion of the fracture face from dissolution and ultimately leaves behind a supporting "pillar" that acts something like the proppant in hydraulic fracturing and helps to keep the fracture open. The dissolving system removes some rock from any portion of the fracture face that is not protected by the masking material. With a balance of masked and un-masked areas along the fracture face, a highly conductive pathway is created using the supporting pillars to hold open the fracture in a method analogous to a "room and pillar " mine. This results in a conductive pathway even if the fluid flow and reaction rates are in one of the regimes in which the dissolution of the fracture face would otherwise be comparatively uniform. The inert particles also serve as a fluid loss additive to reduce the volume of fracturing/dissolving fluid needed.

The masking material will be termed "inert" if it is not dissolved by the formation dissolving agent (or by other later-injected fluids or by formation fluids) for a time longer than the time during which the formation dissolving fluid is actively dissolving the formation. The masking material will be termed "permanently inert" if it is not dissolved by the formation dissolving agent (or by other later-injected fluids or by formation fluids) for a time at least as long as the fracture is useful (for example is part of an injection or production flow path), without remediation. The term "inert" will be used here to mean both "inert" and "permanently inert" unless specified otherwise. The masked, unreacted, localities are truly pillars if they extend entirely across the width of the resulting fracture. This is the case as long as not all of the mask has dissolved and some is trapped between the fracture faces or if the fracture faces move toward one another after the mask is gone but the mask had already resulted in less reaction of the fracture faces where the mask had been located. If most or all of the mask dissolves but the fracture faces do not move toward one another after the mask dissolves (the motion has already occurred), the portion of the fracture face where the mask had been is narrower than portions that had not been masked, but that portion still contributes to the flow path. Whether an inert or permanently inert material is used depends upon many factors, including but not limited to the costs and availability of masking materials, how hard or soft the formation is, how hard or soft the masking material is, and the likelihood of fines migration.

There are a number of particle shapes that are used in the invention, for example, but not limited to beads, fibers, platelets or ribbons, and other shapes. Particle sizes may be uniform or may be broadly heterogeneous. Mixtures of shapes and sizes may be fused. Mixtures of inert and permanently inert may be used.

In one embodiment, particularly useful for creating supporting pillars in carbonates, pillars used to support an open etched fracture are created by pumping soft deformable particles in a retarded acid. These deformable particles become a masking agent as the fracture closes upon them. The masking material covers a portion of the fracture faces and prevents the acid from reacting with this portion of the fracture faces. The un-reacted fracture faces create a small pillar that is capable of holding open the etched fracture. The open area of the fracture is nearly infinitely conductive.

In one embodiment, placement of the masking material is achieved early in the etching process or even before the etching process begins. If the acid (or formation dissolving agent) begins to react before the masking takes place or is completed then the effectiveness of the final masking process may be reduced and the open etched width may be reduced because some of the dissolution agent has been consumed in more uniform removal of some of the rock during the initial dissolution. Therefore, placement of the masking material with a relatively unreactive dissolution agent, such as a highly retarded acid, or an acid that is generated in-situ (e.g. delayed) may be advantageous. Placement of the mask before dissolution may not always be necessary; for example, it may not be necessary in the near wellbore region of a fracture where the fracture could contact a large excess of acid during a fracturing operation. Some dissolution may occur before the placement of the mask, but some dissolution must occur after the placement of the mask.

Inert particles may be provided in various shapes, including, but not limited to fibers, beads, films, ribbons, platelets and mixtures of these shapes. If a mixture is used, the particle sizes of the individual components of the mixture may be the same or different. Almost any particle size may be used. Governing factors include a) the capability of equipment, b) the width of the fracture generated, and c) the desired rate and time of formation dissolution. Preferred sizes are approximately those of proppants and fluid loss additives since operators have the equipment and experience suitable for those sizes.

In one embodiment, excellent particles used to create the masking area are soft deformable materials such as (but not limited to) soft plastic, wax, natural or synthetic rubber, vermiculite, organic seeds or shells, polyacrylamide, phenol formaldehyde polymer, nylon, starch, benzoic acid, metals or naphthalene. These materials conform to one or both fracture faces after they deform, even if they are initially in the form of beads. The deformation of the masking material improves the efficiency of the masking process by creating a larger area of coverage upon fracture closure. The pressure of fracture closure may squeeze the deformable particle into a flattened pancake material that ultimately covers and protects a larger area of the fracture face. Such soft deformable masking materials are often not permanently inert and tend to degrade and completely break down overtime. This minimizes plugging or impairment of the fracture flow capacity after a job has been completed.

Sheet materials or particles having a very large aspect ratio (i.e. mica, cellophane flakes, etc.) are also effective because they cover a relatively large area of the fracture face. If these materials are much less thick than the fracture is wide, they are effective only on one face of the fracture and therefore provide only roughly half of the total supported fracture width. For these materials to conform to a fracture face, either they are flexible or the particles have length and width dimensions that are small relative to the initial fracture face asperity. Operationally, materials having this shape may be difficult to use due to placement issues during pumping.

Particles of non-deformable materials (such as glass, mica and salts) are preferably in shapes that allow large areas of the particles to conform to the fracture faces. Appropriate shapes include sheets and flakes. Beads of non-deformable materials, such as conventional sand and ceramic proppants, may not be as suitable because they contact very little fracture face area. (Normally proppant is not used in acid fracturing, although it can be and such use would be within the scope of the invention.)

In another embodiment, in order to create large pillar structures, it may be desirable to pump slugs of masking particles with the acid so as to have the masking particles create large supporting pillars. That is, the concentration of inert masking particles in the fracturing fluid may be varied during the treatment and may even be zero during part of the treatment.

Treatments are optionally conducted as cost-minimization water fracs in which a low concentration, for example about 0.05 kg/L, of inert material is pumped at a high rate, for example up to about 3500 L/min or more, with little or no viscosifier. Optionally they are also conducted, as are more conventional fracturing treatments, with viscosifiers and higher concentrations of inert masking particles, for example up to about 0.6 kg/L, of inert material or mixture. Care must be exercised to prevent bridging (screening out) of any solid material unless it is desired at some point; one skilled in the art will know that for a given particle shape, flow rate, rock properties, etc. there is a concentration, that can be calculated by one of ordinary skill in the art, above which bridging may occur. The viscosifiers are the polymers or viscoelastic surfactants typically used in fracturing, frac-packing and gravel packing. The lower density of many types of inert particles, relative to the density of conventional proppants, is an advantage since the amount of viscosifier needed is less. Acid usually also acts as a breaker for the viscosifier, thus enhancing cleanup and offsetting any damage that might otherwise be done by the viscosifier. (Acids are known to damage or destroy many synthetic polymers and biopolymers used to viscosify drilling, completion and stimulation fluids. Acids are also known to damage or destroy either the micelle/vesicle structures formed by many viscoelastic surfactants or, in some cases, the surfactants themselves.)

The amount of inert particles used per unit area of fracture to be created depends upon, among other factors, the mechanical properties of the formation, the width of the etched fracture, the width of the hydraulic fracture, the viscosity of the carrier fluid, and the density of the particles. With a balance of masked and un-masked areas along one or both fracture faces, a highly conductive pathway is created using the supporting pillars to hold open the fracture in a method analogous to a "room and pillar " mine. The preferred concentration range is between about 0.42 and about 5 ppg (between about 0.05 and about 0.6 kg/L). The most preferred range is between about 0.83 and about 2.5 ppg (between about 0.1 and about 0.3 kg/L). Care must be exercised to prevent bridging (screening out) of any solid material unless it is desired at some point; one skilled in the art will know that for a given particle shape, flow rate, rock properties, etc. there is a concentration, that can be calculated by one of ordinary skill in the art, above which bridging may occur.

The method of the invention may be used with any dissolution agent for any lithology. By non-limiting example, hydrochloric acid, acetic acid, and the like are typically used for carbonates; chelating agents such as hydroxyethylethylenediamine triacetic acid (HEDTA) and hydroxyethyliminodiacetic acid (HEIDA) can also be used for carbonates, especially when acidified with hydrochloric acid; and mud acid (hydrochloric acid mixed with hydrofluoric acid) and mud acid with acetic acid are commonly used for sandstones. Acids may be retarded by emulsification and gelling and/or delayed by using a precursor, especially for hydrofluoric acid, such as fluoboric acid, ammonium fluoride, and ammonium bifluoride. For sandstone treatment, as is known in the art, if the formation contains any carbonate it is common to pretreat (preflush) the formation with an acid such as hydrochloric acid to dissolve the carbonate and then, if necessary, inject a spacer such as ammonium chloride to push dissolved materials away before injection of the fluoride-containing fluid so that fluoride ion does not contact cations such as sodium, calcium and magnesium which could precipitate. If the dissolution agent contains sufficient chelating agent, the preflush may not be necessary. A typical embodiment for creating differential etching with partial fracture surface masking involves pumping of a mixture containing an inert masking material, an inorganic or organic acid, a fluoride containing chemical and an optional viscosifying agent into a sandstone reservoir at above fracturing pressure.

U. S. Patent Application Publication No. 2003/0104950 describes a particularly effective dissolution agent, that may be used in the present invention, that is made up of either or both of a) an acid selected from one or more of hydrochloric, sulfuric, phosphoric, hydrofluoric, formic, acetic, boric, citric, malic, tartaric, and maleic acids and mixtures of those acids; and b) an aminopolycarboxylic acid chelating agent selected from one or more of ethylenediamine tetraacetic acid (EDTA), hydroxyethylethylenediamine triacetic acid (HEDTA), diethylenetriamine pentaacetic acid (DTPA), hydroxyethyliminodiacetic acid (HEIDA), nitrilotriacetic acid (NTA), and their K, Na, NH₄ or amine salts. One suitable example is a mixture of citric acid, hydrofluoric acid, boric acid, and trisodium hydroxyethylethylenediamine triacetate.

U. S. Patent Application Publication Nos. 2002/0104657 and 2002/0070022 describe a composition useful for treating a sandstone formation, that may be used in the present invention, especially one containing HCl-sensitive materials, e.g., zeolites and chlorites. The composition is an aqueous acidic solution containing a fluoride ion source; a boron source; and an acid, or mixture of acids, which chelate aluminum ions and aluminum fluoride species. The fluoride ion source is selected for example from ammonium bifluoride and ammonium fluoride, and mixtures thereof; the boron source is for example boric acid; and the acid which chelates aluminum ions and aluminum fluoride species is for example a polycarboxylic acid, a polyaminopolycarboxylic acid, a monoaminopolycarboxylic acid, a polycarboxylic acid, a polyaminopolycarboxylic acid, or a mixture of these acids or their salts. The hydrogen fluoride source and the boron source combine to make fluoroboric acid.

U. S. Patent Application Serial No. 10/249,573 describes a dissolving agent, that may be used in the present invention, that is made from a hydrogen fluoride source (such as ammonium fluoride or ammonium bifluoride), and a chelating acid for which the log of the first stability constant with aluminum ion is greater than about 5 (such as one or more than one of maleic acid, tartaric acid, citric acid, NTA (nitrilotriacetic acid), HEIDA (hydroxyethyliminodiacetic acid), HEDTA (hydroxyethylethylenediaminetetraacetic acid, EDTA (ethylenediaminetetraacetic acid), CyDTA (cyclohexylenediaminetetraacetic acid), DTPA (diethylenetriamine-pentaacetic acid), ammonium, lithium, or sodium salts of those acids, or mixtures of those acids and/or their salts). A particularly suitable chelating acid is diammonium ethylenediaminetetraacetic.

Solid hydrogen fluoride sources are not normally components of injected fluids used in sandstone acid fracturing treatments. However, they are useful in the present invention. In addition to the effect of the inert material of the invention, the rate of dissolution of a portion of the sandstone fracture face depends upon whether or not that portion is in contact with a solid hydrogen fluoride source. (The dissolution rate depends upon the relative rates of the release of hydrogen fluoride from the solid, the diffusion or convection of hydrogen fluoride from the solid particle to the formation fracture face, and the reaction of hydrogen fluoride with the formation fracture face.) Therefore, there are areas of the fracture face that are dissolved at three different rates: the area in contact with the inert solid, the area in contact with the solid hydrogen fluoride source, and the area in contact with neither.

Examples of such solid hydrogen fluoride sources are ammonium fluoride, ammonium bifluoride, polyvinylammonium fluorides, polyvinylpyridinium fluorides, pyridinium fluorides, and imidazolium fluorides, sodium tetrafluoroborates, ammonium tetrafluoroborates, salts of hexafluoroantimony, TEFLON^{™} synthetic resinous fluorine-containing polymer, and mixtures of these materials. The solid hydrogen fluoride sources may be coated (here we include encapsulated when saying coated) to delay reaction with water. Other materials fall into this category if they are substantially insoluble in water at near neutral pH and release hydrogen fluoride under acidic conditions. Again, the masking effect is achieved with inert solids. The carrying fluid contains organic or inorganic acids and an optional gelling agent. The organic or inorganic acid in the carrying fluid has very low reactivity toward the sandstone rock. Dissolution reactions take place only upon release of hydrogen fluoride from the solid hydrogen fluoride source.

Acid fracturing is typically undertaken to provide improved flow paths for the production of hydrocarbons, but the method is equally useful in wells for the production of other fluids (such as water or helium) or for injection wells (for example for enhanced oil recovery or for disposal).

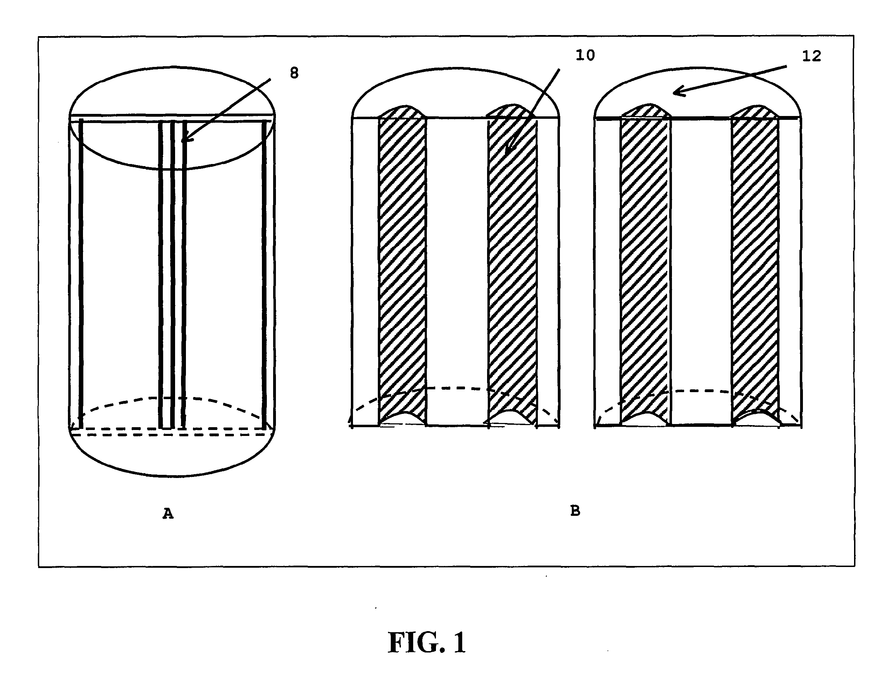

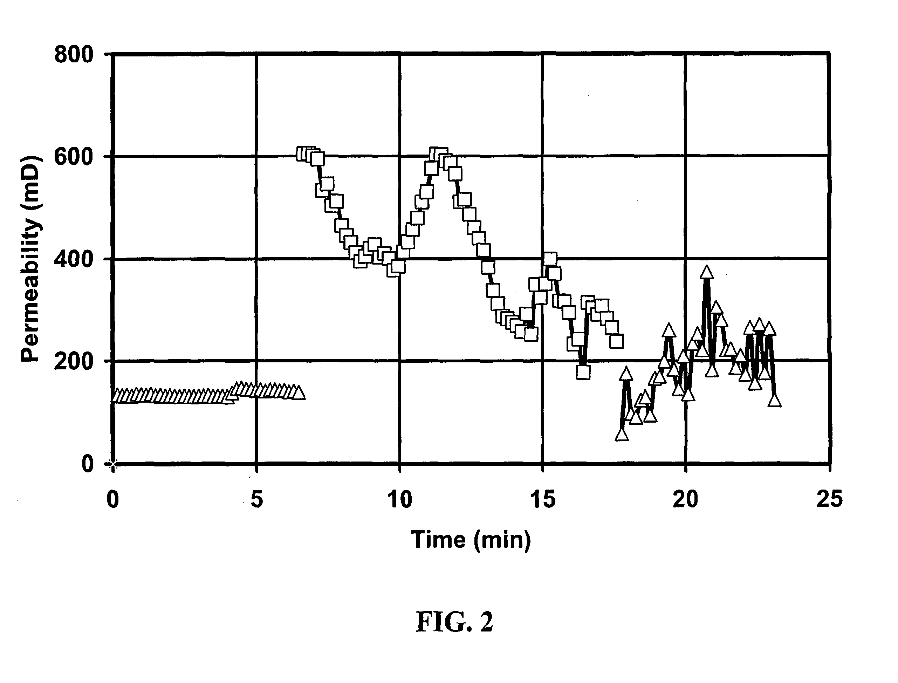

Example 1: Figures 1 and 2 show a core flow experiment in which a split sandstone core was used and the affect of inert masking material was simulated. Figure 1A shows the core with masking material in place, and Figure 1B shows the core after etching. The 2.5 cm x 15 cm inch core was cut in half along the core length; one half is shown as [12]. Teflon fibers [8] (about 0.08 cm x about 15 cm) were placed between the two pieces as shown in Figure 1A. The pieces were then reassembled and loaded into a core holder, and a confining pressure of 13.8 MPa was applied. Figure 2 shows the permeability when several fluids were injected into the gap between the two sandstone pieces in the core holder. A 5% ammonium fluoride solution was injected (triangles before about 7 min.) at a flow rate of 5cc/min, then 12/6 mud acid at the same flow rate 9squares), and then 5% ammonium fluoride again at the same flow rate (triangles after about 17.5 min.). The permeability was clearly higher after the treatment of this simulation of a partially masked core. After the experiment, the core halves were visually inspected and it was found that differential etching had occurred. Figure 1 shows this schematically; region [10] shows the etched region. This masking material spread out under the confining pressure and covered more area than when it was placed, so the etched region in Figure 1B had greater area than the unmasked region in Figure 1A.

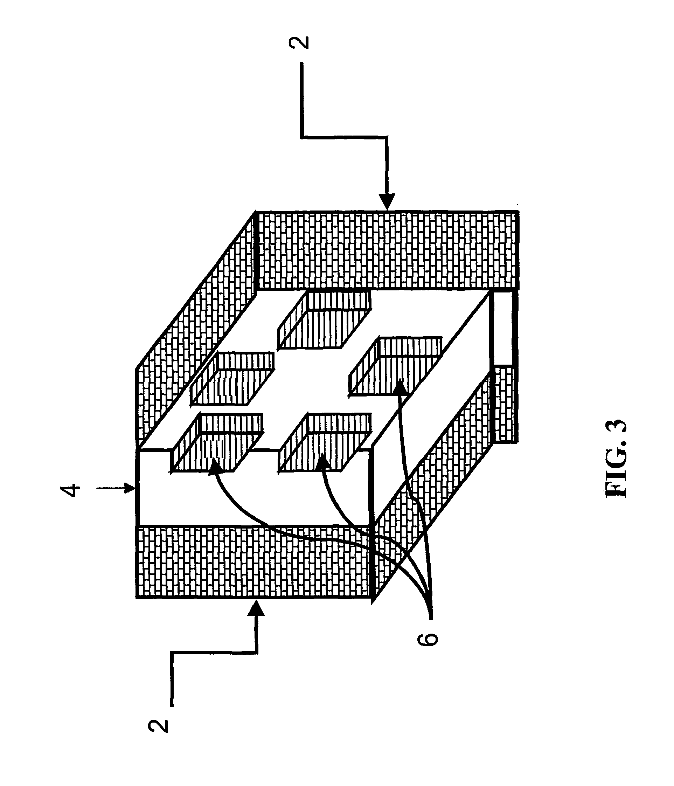

Example 2: Figure 3 shows a schematic of how a fracture would appear if created by the method of the invention. The fracture [4] in the formation [2] contains regions [6] that are not open to fluid flow. These regions are where the inert masking material is trapped when the fracture closes. The fracture face is protected from the formation dissolving agent at those locations.

## Claims

1. A method of creating a fracture In a subterranean formation penetrated by a wellbore comprising:
a) injecting above fracture pressure a fluid comprising an agent capable of dissolving at least one component of said formation, and inert solid particles that are either soft deformable materials or sheet materials or particles having a very large aspect ratio, said inert solid particles being able to conform to one or both faces of said fracture and inhibit reaction of said dissolving agent with said formation where they conform to a fracture face, said particles present in the fluid at a concentration below which particle bridging occurs in the fracture;
b) allowing said fracture to close; and
c) allowing said dissolution agent to react with a portion of said fracture face not in contact with said solid particles.

2. The method of claim 1 wherein said inert solid particles degrade after said dissolution agent reacts.

3. The method of claim 1 wherein said inert solid particles are selected from plastic, glass, polyacrylamide, phenol formaldehyde polymer, nylon, wax, natural rubber, synthetic rubber, vermiculite, organic seeds, organic shells, mica, cellophane flakes, starch, rock salt, benzoic acid, naphthalene, metals and mixtures thereof.

4. The method of any of the preceding claims wherein said dissolution agent is selected from hydrochloric acid, formic acid, acetic acid, lactic acid, glycolic acid, aminopolycarboxylic acids, sulfamic acid, malic acid, tartaric acid, maleic acid, methylsulfamic acid, chloroacetic acid, 3-hydroxypropionic acid, polyaminopolycarboxylic acids, bisulfate salts, latent acid, retarded acid, emulsified acid, encapsulated acid, gelled acid, chemically retarded acid, salts thereof, and mixtures thereof.

5. The method of any of the preceding claims wherein said dissolution agent comprises an acid and said fluid further comprises a hydrogen fluoride source selected from ammonium fluoride, ammonium bifluoride, polyvinylammonium fluoride, polyvinylpyridinium fluoride, pyridinium fluoride, imidazolium fluoride, sodium tetrafluoroborate, ammonium tetrafluoroborate, salts of hexafluoroantimony, TEFLON^{™} synthetic resinous fluorine-containing polymer, and mixtures thereof.

6. The method of claim 5 wherein said hydrogen fluoride source is not dissolved in said fluid and said inert solid particles and said hydrogen fluoride source that is not dissolved in said fluid differ in one or more than one of the properties selected from size, shape, surface area, and hydrolysis rate.

7. The method of claim 6 wherein said hydrogen fluoride source is coated to hinder hydrolysis.

8. The method of any of the preceding claims wherein the concentration of said inert solid particles in said fluid during said injecting step is from 0.05 kg/L to 0.6 kg/L.

9. The method of any of the preceding claims wherein the concentration of said Inert solid particles in said fluid during said injecting step is varied.

10. A composition, for making an acid fracturing fluid, comprising a solid hydrogen fluoride source, and inert solid particles that are either soft deformable materials or sheet materials or particles having a very large aspect ratio, said inert solid particles being able to conform to one or both faces of a fracture in a formation and being able to inhibit reaction of hydrogen fluoride with at least one formation component, where they conform to a fracture face.

11. The composition of claim 10 wherein said inert solid particles are selected from plastic, glass, polyacrylamide, phenol formaldehyde polymer, nylon, wax, natural rubber, synthetic rubber, vermiculite, organic seeds, organic shells, mica, cellophane flakes, starch, rock salt, benzoic acid, metals, naphthalene and mixtures thereof.

12. The composition of claim 10 wherein said solid hydrogen fluoride source is selected from ammonium fluoride, ammonium bifluoride, polyvinylammonium fluoride, polyvinylpyridinium fluoride, pyridinium fluoride, imidazolium fluoride, sodium tetrafluoroborate, ammonium tetrafluoroborate, salts of hexafluoroantimony, TEFLON^{™} synthetic resinous fluorine-containing polymer, and mixtures thereof.

## Patentansprüche

1. Verfahren zum Erzeugen einer Zerklüftung in einer unterirdischen Formation, durch die ein Bohrloch verläuft, das umfasst:
a) Einleiten eines Fluids über dem Zerklüftungsdruck, das ein Mittel, das wenigstens eine Komponente der Formation auflösen kann, und inerte Feststoffpartikel, die entweder weiche verformbare Materialien oder Schichtmaterialien oder Partikel mit einem sehr großen Schlankheitsverhältnis sind, enthält, wobei sich die inerten Feststoffpartikel an eine oder an beide Flächen der Zerklüftung anpassen können und dort, wo sie sich an die Zerklüftungsfläche anpassen, eine Reaktion des Auflösungsmittels mit der Formation verhindern, wobei die Partikel in dem Fluid in einer Konzentration vorhanden sind, unterhalb derer eine Partikelüberbrückung in der Zerklüftung auftritt; b) Zulassen, dass die Zerklüftung geschlossen wird; und
c) Zulassen, dass das Auflösungsmittel mit einem Teil der Zerklüftungsfläche, der nicht mit den Feststoffpartikeln in Kontakt ist, reagiert.

2. Verfahren nach Anspruch 1, wobei die inerten Feststoffpartikel sich verschlechtern, nachdem das Auflösungsmittel reagiert hat.

3. Verfahren nach Anspruch 1, wobei die inerten Feststoffpartikel ausgewählt sind aus Kunststoff, Glas, Polyacrylamid, Phenol-Formaldehyd-Polymer, Nylon, Wachs, Naturkautschuk, Synthetikkautschuk, Vermiculit, organischen Keimen, organischen Hülsen, Mika, Zellophanplättchen, Stärke, Steinsalz, Benzoesäure, Naphthalen, Metallen und Gemischen hiervon.

4. Verfahren nach einem der vorhergehenden Ansprüche, wobei das Auflösungsmittel ausgewählt ist aus Salzsäure, Ameisensäure, Essigsäure, Milchsäure, Glycolsäure, Aminopolycarboxylsäuren, Amidoschwefelsäure, Apfelsäure, Weinsäure, Maleinsäure, Methyl-Amidoschwefelsäure, Chloressigsäure, 3-Hydroxypropionsäure, Polyaminopolycarboxylsäuren, Hydrogensulfatsalzen, gebundener Säure, verzögerter Säure, emulgierter Säure, eingekapselter Säure, gelierter Säure, chemisch verzögerter Säure, Salzen hiervon und Gemischen hiervon.

5. Verfahren nach einem der vorhergehenden Ansprüche, wobei das Auflösungsmittel eine Säure enthält und das Fluid ferner eine Fluorwasserstoffquelle enthält, die ausgewählt ist aus Ammoniumfluorid, Ammoniumbifluorid, Polyvinylammoniumfluorid, Polyvinylpyridiniumfluorid, Pyridiniumfluorid, Imidazoliumfluorid, Natriumtetrafluorborat, Ammoniumtetrafluorborat, Salzen von Hexafluorantimon, TEFLON^{™}-Kunstharz-Fluor-haltiges Polymer und Gemischen hiervon.

6. Verfahren nach Anspruch 5, wobei die Fluorwasserstoffquelle in dem Fluid nicht aufgelöst ist und die wirkungslosen Feststoffpartikel und die Fluorwasserstoffquelle, die in dem Fluid nicht aufgelöst ist, sich in einer oder in mehreren der Eigenschaften unterscheiden, die ausgewählt sind aus Größe, Form, Flächeninhalt und Hydrolyserate.

7. Verfahren nach Anspruch 6, wobei die Fluorwasserstoffquelle beschichtet ist, um eine Hydrolyse zu verhindern.

8. Verfahren nach einem der vorhergehenden Ansprüche, wobei die Konzentration der inerten Feststoffpartikel in dem Fluid während des Einleitungsschrittes im Bereich von 0,05 kg/L bis 0,6 kg/L liegt.

9. Verfahren nach einem der vorhergehenden Ansprüche, wobei die Konzentration der inerten Feststoffpartikel in dem Fluid während des Einleitungsschrittes verändert wird.

10. Zusammensetzung zum Herstellen eines Säurezerklüftungsfluids, die eine feste Fluorwasserstoffquelle und inerte Feststoffpartikel, die entweder weiche verformbare Materialien oder Schichtmaterialien oder Partikel mit einem sehr großen Schlankheitsverhältnis sind, enthält, wobei sich die inerten Feststoffpartikel an eine oder an beide Flächen einer Zerklüftung in einer Formation anpassen können und eine Reaktion von Fluorwasserstoff mit wenigstens einer Formationskomponente dort, wo sie sich an eine Zerklüftungsfläche anpassen, verhindern können.

11. Zusammensetzung nach Anspruch 10, wobei die inerten Feststoffpartikel ausgewählt sind aus Kunststoff, Glas, Polyacrylamid, Phenol-Formaldehyd-Polymer, Nylon, Wachs, Naturkautschuk, Synthetikkautschuk, Vermiculit, organischen Keimen, organischen Hülsen, Mika, Zellophanplättchen, Stärke, Steinsalz, Benzoesäure, Metallen, Naphthalen und Gemischen hiervon.

12. Zusammensetzung nach Anspruch 10, wobei die feste Fluorwasserstoffquelle ausgewählt ist aus Ammoniumfluorid, Ammoniumbifluorid, Polyvinylammoniumfluorid, Polyvinylpyridiniumfluorid, Pyridiniumfluorid, Imidazoliumfluorid, Natriumtetrafluorborat, Ammoniumtetrafluorborat, Salzen von Hexafluorantimon, TEFLON^{™}-Kunstharz-Fluor-haltiges Polymer und Gemischen hiervon.

## Revendications

1. Procédé de création d'une fracture à l'intérieur d'une formation souterraine pénétrée par un puits de forage comprenant les étapes consistant à :
a) injecter, au-dessus de la pression de fracture, un fluide comprenant un agent capable de dissoudre au moins un des composants de ladite formation et des particules solides inertes qui sont des matières molles déformables ou des matériaux en feuillets ou des particules ayant un rapport d'aspect très élevé, lesdites particules solides inertes étant capables de se conformer à l'une des deux ou aux deux faces de ladite fracture et d'inhiber la réaction dudit agent de dissolution avec ladite formation dans laquelle ils se conforment à une face de fracture, lesdites particules étant présentes dans le fluide à une concentration en dessous de laquelle un pontage de particules survient dans la fracture ;
b) permettre à ladite fracture de se refermer ; et
c) permettre audit agent de dissolution de réagir avec une partie de ladite face de fracture qui n'est pas en contact avec lesdites particules solides.

2. Procédé selon la revendication 1, dans lequel lesdites particules solides inertes se dégradent après que ledit agent de dissolution a réagi.

3. Procédé selon la revendication 1, dans lequel lesdites particules solides inertes sont choisies parmi les matières plastiques, le verre, le polyacrylamide, le polymère phénol/formaldéhyde, le nylon, la cire, le caoutchouc naturel, le caoutchouc synthétique, la vermiculite, les graines organiques, les coques organiques, le mica, les flocons de cellophane, l'amidon, l'halite, l'acide benzoïque, le naphtalène, les métaux et des mélanges de ceux-ci.

4. Procédé selon l'une quelconque des revendications précédentes, dans lequel ledit agent de dissolution est choisi parmi l'acide chlorhydrique, l'acide formique, l'acide acétique, l'acide lactique, l'acide glycolique, l'acide aminopolycarboxylique, l'acide sulfamique, l'acide malique, l'acide tartrique, l'acide maléique, l'acide méthylsulfamique, l'acide chloroacétique, l'acide 3-hydroxypropionique, les acides polyaminopolycarboxyliques, les bisulfates, un acide latent, un acide retardé, un acide émulsionné, un acide encapsulé, un acide gélifié, un acide chimiquement retardé et des sels et des mélanges de ceux-ci.

5. Procédé selon l'une quelconque des revendications précédentes, dans lequel ledit agent de dissolution comprend un acide et ledit fluide comprend en outre une source de fluorure d'hydrogène choisie parmi le fluorure d'ammonium, le bifluorure d'ammonium, le poly(fluorure de vinylammonium), le poly(fluorure de vinylpyridinium), le fluorure de pyridinium, le fluorure d'imidazolium, le tétrafluoroborate de sodium, le tétrafluoroborate d'ammonium, les sels d'hexafluoroantimoine, un polymère résineux synthétique fluoré TEFLON^{™} et des mélanges de ceux-ci.

6. Procédé selon la revendication 5, dans lequel ladite source de fluorure d'hydrogène n'est pas dissoute dans ledit fluide et lesdites particules solides inertes et ladite source de fluorure d'hydrogène qui n'est pas dissoute dans ledit fluide diffèrent selon une ou plusieurs propriétés parmi les propriétés choisies parmi la taille, la forme, la surface spécifique et la vitesse d'hydrolyse.

7. Procédé selon la revendication 6, dans lequel ladite source de fluorure d'hydrogène est recouverte pour empêcher l'hydrolyse.

8. Procédé selon l'une quelconque des revendications précédentes, dans lequel la concentration desdites particules solides inertes dans ledit fluide pendant ladite étape d'injection va de 0,05 kg/L à 0,6 kg/L.

9. Procédé selon l'une quelconque des revendications précédentes, dans lequel la concentration desdites particules solides inertes dans ledit fluide pendant ladite étape d'injection varie.

10. Composition, pour élaborer un fluide de fracturation acide, comprenant une source de fluorure d'hydrogène solide et des particules solides inertes qui sont des matériaux mous déformables ou des matériaux en feuillets ou des particules ayant un rapport d'aspect très élevé, lesdites particules solides inertes étant capables de se conformer à l'une des deux ou aux deux faces d'une fracture dans une formation et étant capables d'inhiber la réaction du fluorure d'hydrogène avec au moins un composant de formation, dans laquelle ils se conforment à une face de la fracture.

11. Composition selon la revendication 10, dans laquelle lesdites particules solides inertes sont choisies parmi les matières plastiques, le verre, le polyacrylamide, le polymère phénol/formaldéhyde, le nylon, la cire, le caoutchouc naturel, le caoutchouc synthétique, la vermiculite, les graines organiques, les coques organiques, le mica, les flocons de cellophane, l'amidon, l'halite, l'acide benzoïque, les métaux, le naphtalène et des mélanges de ceux-ci.

12. Composition selon la revendication 10 dans laquelle ladite source de fluorure d'hydrogène solide est choisie parmi le fluorure d'ammonium, le bifluore d'ammonium, le poly( fluorure de vinylammonium), le poly(fluorure de vinylpyridinium), le fluorure de pyridinium, le fluorure d'imidazolium, le tétrafluoroborate de sodium, le tétrafluoroborate d'ammonium, les sels d'hexafluoroantimoine, un polymère résineux synthétique fluoré TEFLON^{™} et des mélanges de ceux-ci.
